(19) Europäisches Patentamt
European Patent Office
Office européen des brevets

(11) **EP 4 607 766 A1**

(12) **EUROPEAN PATENT APPLICATION**

(43) Date of publication:
27.08.2025 Bulletin 2025/35

(21) Application number: 25158284.7

(22) Date of filing: 17.02.2025

(51) International Patent Classification (IPC):
H02K 1/278 (2022.01)    H02K 29/03 (2006.01)

(52) Cooperative Patent Classification (CPC):
H02K 1/278; H02K 29/03; H02K 2213/03

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.02.2024 US 202463555425 P

(71) Applicant: American Precision Industries, Inc.
West Chester, PA 19382 (US)

(72) Inventors:
• Ramanujam, Madhavan
  19341 Exton (US)
• Kraynak, Christopher Andrew
  19438 Harleysville (US)
• Culp, Jonathan
  19438 Kennett Square (US)

(74) Representative: Haseltine Lake Kempner LLP
Cheapside House
138 Cheapside
London EC2V 6BJ (GB)

(54) **BRUSHLESS SYNCHRONOUS MOTOR WITH LOW COGGING TORQUE**

(57)    A brushless synchronous motor includes a stator disposed about a rotational axis and defining radially inwardly extending teeth about which conductors are wound in a distributed winding layout to define multiple motor phases. Each tooth defines a shoe at a radially inner end spaced from a circumferentially adjacent shoe by a stator shoe gap. A rotor within the stator rotates relative to the stator about the rotational axis and includes a shaft and magnet tiles supported on the shaft and covered with a magnet tile retention sleeve. Each magnet tile is spaced from a circumferentially adjacent magnet tile by a magnet tile gap. The magnet tile gap tapers moving from a radially outer end to a radially inner end of the gap and a width of the gap at the radially outer end of the gap is less than or equal to a width of the stator shoe gap.

FIG. 4

**Description**

## BACKGROUND OF THE INVENTION

a. Field of the Invention

This disclosure relates to brushless synchronous motors. In particular, the disclosure relates to a brushless permanent magnet synchronous motor in which magnet tiles in the motor are profiled to minimize cogging torque in the motor.

b. Background Art

A conventional brushless synchronous motor includes a stator and a rotor. The stator includes a plurality of radially inwardly extending teeth defining slots between the teeth in which conductors are wound. The rotor includes a substantially square shaft supporting a plurality of magnet tiles. Conventional brushless synchronous motors produce an undesirable cogging torque resulting from the interaction of the magnet tiles and the ferromagnetic teeth of the stator. This cogging torque creates a non-uniform torque output, or torque ripple, for the motor that is particularly noticeable in low-speed operations and must be minimized in certain applications such as medical shavers. To reduce cogging torque, the magnet tiles of the motor may have a profile with a non-uniform thickness that is greatest at a circumferential center of the magnet tile (such that the magnet tile is sometimes referred to as a bread-loaf" magnet tile). This magnet tile profile facilitates a reduction in cogging torque as well as generation of a sinusoidal back electromotive force (back-emf) constant (Ke) waveform. Nevertheless, this profile does not eliminate cogging torque and the existence of cogging torque remains a significant issue in certain motors including, for example, motors in which the ratio of an active length of the motor to an outer diameter of the motor is relatively large and motors having relatively small outer diameters (e.g., less than 12 mm).

One conventional method for further reducing cogging torque involves skewing the stator or rotor by rotationally shifting each lamination of the stator or rotor. Skewing increases the complexity and time required for assembly of the motor. The effectiveness of skewing is also limited in certain motors. In particular, in motors having a relatively long active length, skewing the stator results in slot configurations that create significant difficulties for inserting windings into the slots. In motors having bread-loaf shaped magnet tiles, skewing the rotor must be done in a step-wise fashion rather than continuously limiting the ability to further reduce cogging torque.

Another conventional method for reducing cogging torque is to optimize the ratio of the pole arc angle for a bread-loaf magnet tile (i.e., the angle centered on the rotational axis of the rotor and spanning from one circumferential end of the magnet tile to the opposite circumferential end of the magnet tile) to the pole pitch angle (i.e., the angle centered on the rotational axis of the rotor and spanning from a point on one magnet tile to a corresponding point on a circumferentially adjacent magnet tile). The effectiveness of this approach is again limited in certain motors. In particular, in motors having relatively small diameters, the ability to vary the ratio of the pole arc angle to the pole pitch angle is limited.

The inventor herein has recognized a need for a brushless synchronous motor that will minimize and/or eliminate one or more of the above-identified deficiencies.

## BRIEF SUMMARY OF THE INVENTION

This disclosure relates to brushless synchronous motors. In particular, the disclosure relates to a brushless permanent magnet synchronous motor profiled to minimize cogging torque in the motor.

A brushless synchronous motor in accordance with one embodiment includes a stator disposed about a rotational axis. The stator defines a plurality of radially inwardly extending teeth about which conductors are wound in a distributed winding layout to define multiple motor phases. Each tooth of the plurality of teeth defines a shoe at a radially inner end of the tooth and spaced from a circumferentially adjacent shoe of a circumferentially adjacent tooth by a stator shoe gap. The motor further includes a rotor disposed within the stator and configured for rotation relative to the stator about the rotational axis. The rotor includes a shaft and a plurality of magnet tiles supported on the shaft and covered with a magnet tile retention sleeve. Each magnet tile of the plurality of magnet tiles is spaced from a circumferentially adjacent magnet tile by a magnet tile gap. The magnet tile gap tapers moving from a radially outer end of the magnet tile gap to a radially inner end of the magnet tile gap and a width of the magnet tile gap at the radially outer end of the magnet tile gap is less than or equal to a width of the stator shoe gap.

A brushless synchronous motor in accordance with the teachings herein is advantageous relative to conventional brushless synchronous motors. In particular, the motor produces less cogging torque than conventional motors and is particularly useful for motors having a relatively large ratio of the active length of the motor to the outer diameter of the motor in which conventional methods for reducing cogging torque are impractical. Further, the motor enables a reduction in cogging torque without negatively impacting other performance factors associated with the motor such as back-emf constant, torque to weight ratio and thermal performance.

The foregoing and other aspects, features, details, utilities, and advantages of the present teachings will be apparent from reading the following description and claims, and from reviewing the accompanying drawings.

## BRIEF DESCRIPTION OF THE DRAWINGS

Figures 1-2 are cross-sectional views of prior art brushless synchronous motors.

Figure 3 is a cross-sectional view of one embodiment of a brushless synchronous motor in accordance with teachings herein.

Figure 4 is a cross-sectional view of one embodiment of a brushless synchronous motor in accordance with teachings herein.

Figure 5 is an enlarged cross-sectional view of a portion of the motor of Figures 3-4 illustrating various dimensions associated with the motor.

Figure 6 is a graph illustrating cogging torque at different rotational positions of the rotor for each of the motors shown in Figures 1, 2 and 3-4.

Figure 7 is graph illustrating cogging torque at different harmonic orders for each of the motors shown in Figures 1, 2 and 3-4.

Figure 8 is a graph illustrating a back electromotive force (back-emf) constant (Ke) at different rotational positions of the rotor for each of the motors shown in Figures 1, 2 and 3-4.

## DETAILED DESCRIPTION OF EMBODIMENTS OF THE INVENTION

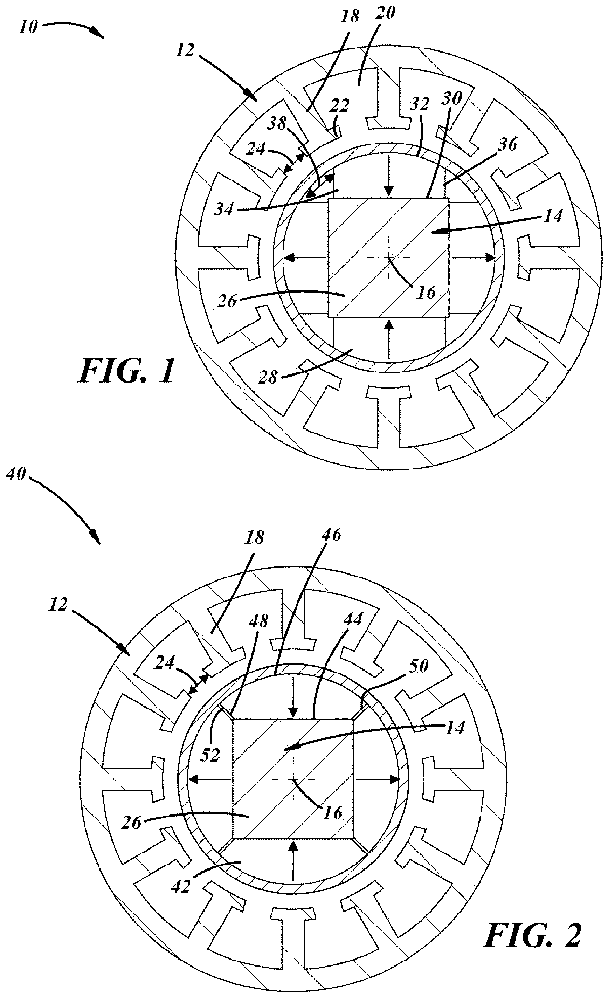

Referring now to the drawings wherein like reference numerals are used to identify identical components in the various views, Figure 1 illustrates a prior art brushless synchronous motor 10. Motor 10 includes a stator 12 and a rotor 14.

Stator 12 is provided to generate a rotating magnetic field which interacts with the magnetic field generated by rotor 14 to generate torque and to cause rotation of rotor 14. Stator 12 is disposed about an axis 16 and may comprise a plurality of laminations that are formed from a material, such as silicon-iron, having a relatively low magnetic reluctance and are stacked along axis 16. Stator 12 includes a plurality of radially inwardly extending teeth 18. Teeth 18 are generally rectangular in cross-section and define stator slots 20 between circumferentially adjacent teeth 18 configured to receive coils or other conductors that are wound about the teeth 18 and used to produce magnetic fields and corresponding rotation of rotor 14. Each tooth 18 may define a stator shoe 22 at a radially inner end projecting in both circumferential directions to support the conductors and configured the magnetic fields. Circumferentially adjacent stator shoes 22 define a stator shoe gap 24 at a radially inner end of each slot 20. Teeth 18 and shoes 22 define a bore configure to receive rotor 14.

Rotor 14 is provided to drive a load (not shown) connected to rotor 14. Rotor 14 includes a shaft 26 and a plurality of magnet tiles 28 supported on shaft 26. Shaft 26 is provided to directly or indirectly engage and drive the load. Shaft 26 extends longitudinally along axis 16 and is disposed about, and may be centered about, axis 16. Shaft 26 may be substantially square in cross-section. Magnet tiles 28 generate magnetic fields that interact with the magnetic fields generated by stator 12 to cause rotation of rotor 14. Magnet tiles 28 are magnetized and may comprise permanent magnets. Magnet tiles 28 have a "bread-loaf" shape. Each magnet tile 28 has a radially inner surface 30 that is flat and engages one side of shaft 26 and a radially outer surface 32 that is curved such that the radial thickness of the magnet tile 28 varies between a maximum thickness at a circumferential center of the magnet tile 28 and a minimum thickness at each circumferential edge of the magnet tile 28. Each magnet tile 28 further includes opposed circumferential side surfaces 34, 36 extending between surfaces 30, 32 and that are perpendicular to surface 30. As a result, adjacent magnet tiles 28 define magnet tile gaps 38 having a width that increases moving radially outwardly from shaft 26. The width of the magnet tile gap 38 at the radially outermost end of the gap is relatively large and, in particular, larger than the stator shoe gap 24. In motor 10, the ratio of the pole arc angle $\tau_a$ to the pole pitch angle $\tau_p$ is between 0.7 and 0.8.

Referring now to Figure 2, another prior art brushless synchronous motor 40 is shown. Motor 40 is substantially similar to motor 10 and like reference numbers are used to identify similar components. Motor 40 differs from motor 10 in that rotor 14 includes magnet tiles 42 that differ from magnet tiles 28 in motor 10. Magnet tiles 42 again have a radially inner surface 44 that is flat and engages one side of shaft 26 and a radially outer surface 46 that is curved such that the radial thickness of the magnet tile 42 varies between a maximum thickness at a circumferential center of the magnet tile 42 and a minimum thickness at each circumferential edge of the magnet tile 42. Each magnet tile 42 further includes opposed circumferential side surfaces 48, 50 extending between surfaces 44, 46. In contrast to magnet tile 28 of motor 10, the radially outer surface 46 of magnet tile 42 in motor 40 has a greater circumferential length than the radially outer surface 32 of magnet tile 28 and the side surfaces 48, 50 of magnet tile 42 intersect surface 44 of magnet tile 42 at an angle close to ninety mechanical degrees resulting in a nearly complete circle formed by magnet tiles 42 and very narrow magnet tile gaps 52 that have a uniform or constant circumferential width. In motor 40, the ratio of the pole arc angle $\tau_a$ to the pole pitch angle $\tau_p$ is between 0.95 and 0.98.

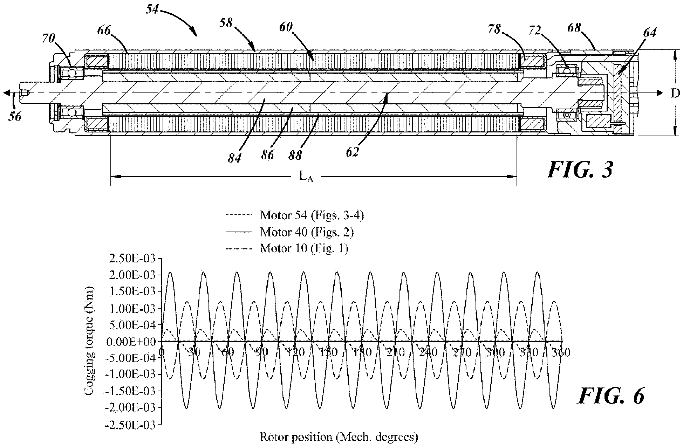

Motors 10, 40 continue to generate an undesirable amount of cogging torque. As discussed hereinabove, the cogging torque can be further mitigated by skewing the stator 12 or rotor 14 or my optimizing the ratio of the pole arc angle to pole pitch angle. In motors having a relative high ratio of the active length of the motor to the outer diameter of the motor, however, these methods of reducing cogging torque may create other problems or may not be feasible. Referring now to Figures 3-4, motor 54 has been developed to overcome these issues.

Motor 54 is a brushless synchronous motor. Motor 54 is relatively small and long and is configured for use in applications such as medical shavers in which both motor performance and ergonomics/ease of handling are important factors in designing the device. Due to the intended application, motor 54 is configured as a relatively long, but small motor and, in particular, a motor having an active length $L_A$ along the rotational axis 56 of motor 54 that is at least four times as large as the diameter D of the motor 54. As discussed hereinabove, traditional methods for reducing cogging torque in motors have limitations in motors with such a configuration. Motor 54 includes a motor housing 58, a stator 60, a rotor 62 and a rotor position feedback system 64.

Motor housing 58 is provided to position and orient the other components of motor 54 and to protect those components from foreign objects and elements. Housing 58 may be made from non-magnetic stainless steel. Housing 58 may include multiple members 66, 68. Member 66 is disposed about, and may be centered about axis 56. Member 66 is tubular in shape and is configured to receive stator 60 and rotor 62 therein. Member 66 defines an endbell at one axial end of motor 54 configured to receive a bearing 70. Member 68 is also disposed about, and may be centered about axis 56. Member 68 is disposed at the opposite axial end of motor 54 and defines another endbell configured to receive a bearing 72. Member 68 is configured to receive rotor position feedback system 64 and to isolate rotor position feedback system 64 from stator 60. Member 68 may define passages for routing wires from stator 60 to external devices (e.g., a motor controller).

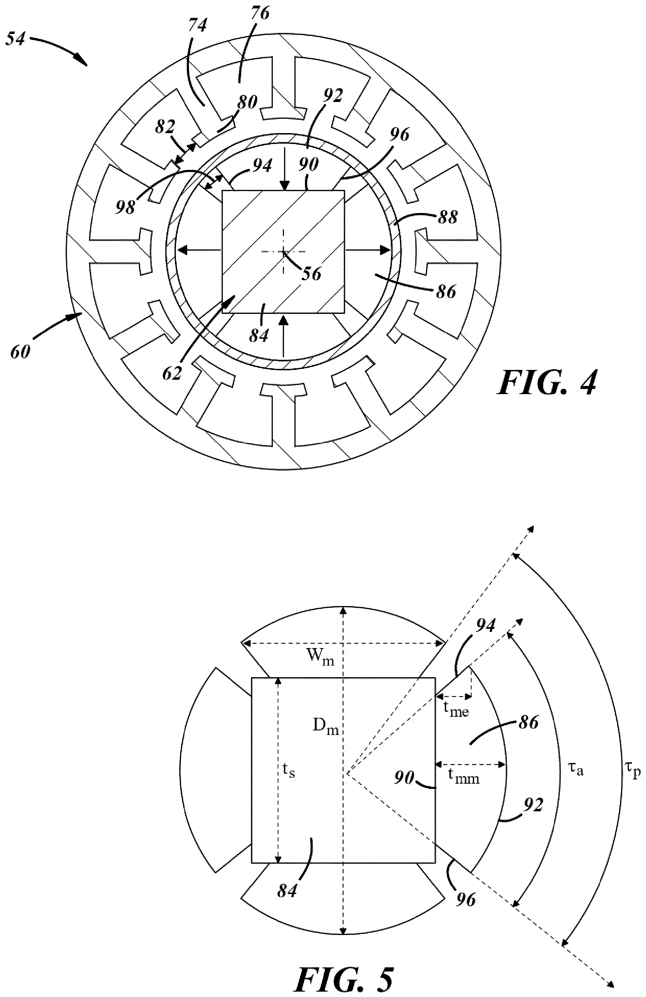

Stator 60 is provided to generate a rotating magnetic field that interacts with a magnetic field generated by rotor 62 to develop a torque and to cause rotation of rotor 62. Stator 60 is disposed about, and may be centered about, axis 56 and may comprise a plurality of laminations that are formed from a material, such as silicon-iron, having a relatively low magnetic reluctance and are stacked along axis 56. Stator 60 is preferably not skewed. Referring to Figure 4, stator 60 includes a plurality of radially inwardly extending teeth 74. In the illustrated embodiment, stator 60 includes twelve teeth 74, but it should be understood that the number of teeth may vary. Teeth 74 are generally rectangular in cross-section and define stator slots 76 between circumferentially adjacent teeth 74 configured to receive coils or other conductors 78 (see Figure 3) that are wound about the teeth 74 and used to produce magnetic fields and corresponding rotation of rotor 62. The conductors 78 are wound about teeth 74 in a distributed winding layout to define multiple motor phases (e.g., three motor phases; it should be understood, however, that the number of motor phases may vary). Further, the ratio of the number of slots 76 relative to the number of poles times the number of motors phases may be one. Each tooth 74 may define a stator shoe 80 at a radially inner end projecting in both circumferential directions to support the conductors 78 and configure the magnetic fields generated by stator 60. Each stator shoe 80 is spaced from a circumferentially adjacent stator shoe 80 of a circumferentially adjacent stator tooth 74 by a stator shoe gap 82 formed at a radially inner end of each slot 76. Teeth 74 and shoes 80 define a bore configure to receive rotor 62.

Rotor 62 is provided to move a load (not shown) connected to rotor 62 such as a cutting tool for shaving bone. Rotor 62 is disposed within stator 60 and configured for rotation relative to stator 60 about axis 56. Rotor 62 is preferably not skewed. Rotor 62 includes a shaft 84, a plurality of magnet tiles 86 supported on shaft 84, and a magnet tile retention sleeve 88 (Figure 3) disposed about magnet tiles 86 and configured to maintain the position of magnet tiles 86.

Shaft 84 is provided to directly or indirectly engage and drive the load such as a cutting tool in a medical shaver. Referring to Figure 3, shaft 84 extends longitudinally along axis 56 and is disposed about, and may be centered about, axis 56. Shaft 84 is supported within motor housing 58 and, in particular, within the opposed endbells of motor housing 58 by bearings 70, 72. One axial end of shaft 84 extends outward from motor housing 58 for direct or indirect connection to the load. The other axial end of shaft 84 is disposed proximate rotor position feedback system 64 and may support elements of a conventional encoder to allow rotor position feedback system 64 to monitor the position of rotor 62. Referring again to Figure 4, shaft 84 may be square or substantially square in cross-section.

Magnet tiles 86 generate magnetic fields that interact with the magnetic fields generated by stator 60 to cause rotation of rotor 62. In the illustrated embodiment, rotor 62 includes four magnet tiles 86, but it should be understood that the number of magnet tiles 86 may vary. Magnet tiles 86 are magnetized and may comprise permanent magnets. In accordance with one aspect of the teachings disclosed herein, magnet tiles 86 are magnetized in a direction parallel to a thickness of the magnet title. Each magnet tile 86 has a radially inner surface 90 that is flat and engages one side of shaft 84. A width of surface 90 is less than the width of shaft 84 and each circumferential end of surface 90 is located inward from the corresponding circumferential end of the side of shaft 84 on which the magnet tile 86 is mounted. Each magnet tile 86 has a radially outer surface 92 that is curved in a circular arc. Referring to Figure 5, the radial thickness of the magnet tile 86 between surfaces 90, 92 varies between a maximum thickness $t_{mm}$ at a circumferential center of the magnet tile 86 and a minimum thickness $t_{me}$ at each circumferential edge of the magnet tile 86. The width of surface 92 is greater than the width of surface 90 and the width $t_s$ of shaft 84 such that each circumferential end of surface 92 is located outward from the corresponding circumferential end of the side of shaft 84 on which the magnet tile 86 is mounted and the width

$W_m$ of magnet tile 86 at its greatest extent is greater than the width $t_s$ of shaft 84. Each magnet tile 86 further includes opposed circumferential side surfaces 94, 96 extending between surfaces 90, 92. Because of the shape and length of inner and outer surfaces 90, 92, side surfaces 94, 96 project in a generally radial direction and the circumferential width of magnet tile 86 tapers moving from radially outer surface 92 to radially inner surface 90 and along surfaces 94, 96. Further, and because magnet titles 86 are magnetized in a direction parallel to the thickness of the magnet title 86, each magnet tile 86 produces a magnetization vector having a length that varies from a maximum length at a circumferential center of the magnet tile 86 to a minimum length at each circumferential end of the magnet tile 86.

In accordance with one aspect of the motor 54 disclosed herein, the configuration of magnet tile 86 results in a ratio of a pole arc angle $\tau_a$ to a pole pitch angle $\tau_p$ between 0.8 and 0.9. In accordance with another aspect of the disclosed motor 54, magnet tile 86 is configured in accordance the formula $W_m = D_m \times \sin(\tau_a/2)$ in which $W_m$ is a maximum width of the magnet tile 86, $D_m$ is a diameter measured from a radially outer surface of the magnet tile 86 to a radially outer surface of a diametrically opposite magnet title 86 ($D_m$ is typically about one half of the outer diameter $D_O$ of the stator 60 lamination stack) and $\tau_a$ is the pole arc angle of the magnet tile 86. In accordance with another aspect of the disclosed motor 54, magnet tile 86 is configured in accordance with the formula $t_{me} = [\tan((180°/P) + (180°/P) - (\tau_a/2)] * (t_s/2) - (t_s/2)$ where $t_{me}$ is a thickness of the magnet tile 86 at a circumferential end of the magnet tile 86, P is the number of magnet tiles 86, $\tau_a$ is a pole arc angle of the magnet tile 86 and $t_s$ is thickness of the shaft 84.

Referring again to Figure 4, the configuration or profile of magnet tiles 86 results in magnet tile gaps 98 between circumferentially adjacent magnet tiles 86. Each magnet tile gap 98 tapers moving from a radially outer end of the magnet tile gap 98 to a radially inner end of the magnet tile gap 98 such that the width of the magnet tile gap 98 is greatest at the radially outer end of the magnet tile gap 98 and least at the radially inner end of the magnet tile gap 98. In addition, the width of the magnet tile gap 98 at the radially outer end of the magnet tile gap 98 is less than or equal to the width of the stator shoe gap 82.

The configuration of the magnet titles 86 and magnet tile gaps 98 reduces variation in airgap reluctance with respect to the position of rotor 62 and results in a significant reduction in cogging torque and other benefits. Because cogging torque is defined as

$$T_{cogging} = \frac{1}{2}\phi^2\frac{dR}{d\theta}$$

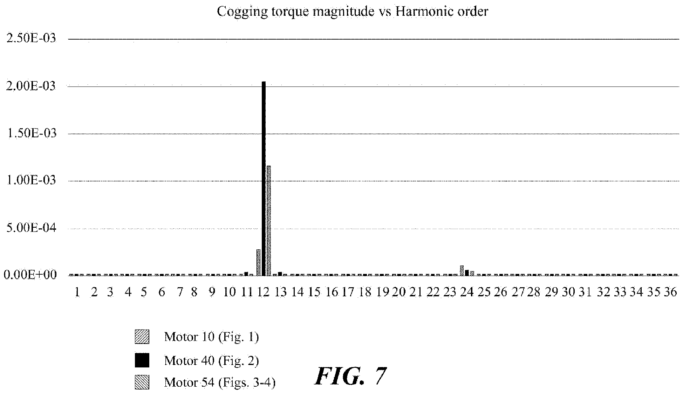

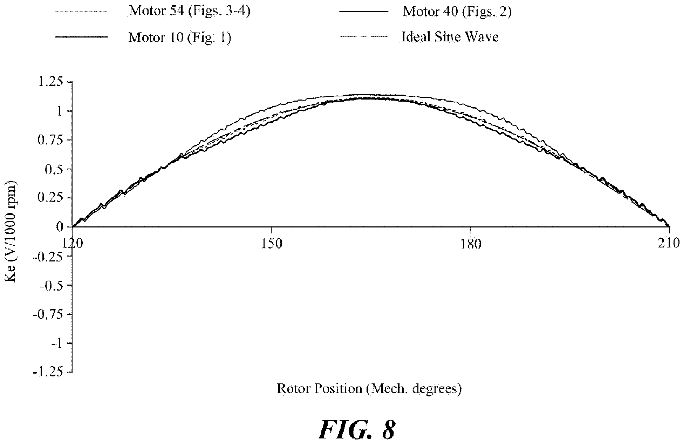

if the variation in airgap reluctance with respect to rotor position is minimized, cogging torque is also minimized. Referring to Figure 6, the configuration of magnet tiles 86 and motor 54 generate a significant reduction in cogging torque relative to prior art motors 10 and 40 at all rotational positions of rotor 62. Further, and with reference to Figure 7, the configuration of magnet tiles 86 and motor 54 generate a significant reduction in cogging torque relative to prior art motors 10 and 40 in each harmonic order. Referring to Figure 8, in addition to a reduction in cogging torque the configuration of magnet tiles 86 and motor 54 produces a back electromotive force constant (Ke) waveform that is substantially sinusoidal in shape.

A brushless synchronous motor 54 in accordance with the teachings herein is advantageous relative to conventional brushless synchronous motors. In particular, the motor 54 produces less cogging torque than conventional motors and is particularly useful for motors having a relatively large ratio of the active length $L_A$ of the motor 54 to the outer diameter D of the motor 54 in which conventional methods for reducing cogging torque are impractical. Further, the motor 54 enables a reduction in cogging torque without negatively impacting other performance factors associated with the motor such as back-emf constant, torque to weight ratio and thermal performance.

While the invention has been shown and described with reference to one or more particular embodiments thereof, it will be understood by those of skill in the art that various changes and modifications can be made without departing from the spirit and scope of the invention.

## Claims

1. A brushless synchronous motor, comprising:

   a stator disposed about a rotational axis, the stator defining a plurality of radially inwardly extending teeth about which conductors are wound in a distributed winding layout to define multiple motor phases, each tooth of the plurality of teeth defining a shoe at a radially inner end of the tooth and spaced from a circumferentially adjacent shoe of a circumferentially adjacent tooth by a stator shoe gap;
   a rotor disposed within the stator and configured for rotation relative to the stator about the rotational axis, the rotor including

        a shaft; and;
        a plurality of magnet tiles supported on the shaft;

   wherein each magnet tile of the plurality of magnet tiles is spaced from a circumferentially adjacent magnet tile by a magnet tile gap, the magnet tile gap tapering moving from a radially outer end of the magnet tile gap to a radially inner end of the magnet tile gap and a width of the magnet tile gap at the radially outer end of the magnet tile gap less than or equal to a width of the stator shoe gap.

2. The brushless synchronous motor of claim 1 wherein an active length of the motor along the rotational axis is at least four times as large as a diameter of the motor.

3. The brushless synchronous motor of claim 1 or 2 wherein the stator is not skewed.

4. The brushless synchronous motor of any preceding claim wherein the rotor is not skewed.

5. The brushless synchronous motor of any preceding claim wherein each magnet tile of the plurality of tiles is magnetized in a direction parallel to a thickness of the magnet title.

6. The brushless synchronous motor of any preceding claim wherein each magnet tile of the plurality of magnet tiles has radially outer surface that is curved.

7. The brushless synchronous motor of any preceding claim wherein each magnet tile of the plurality of magnet tiles tapers from a radially outer surface of the magnet tile to a radially inner surface of the magnet tile.

8. The brushless synchronous motor of any preceding claim wherein each magnet tile of the plurality of magnet tiles has a maximum thickness at a circumferential center of the magnet and a minimum thickness at each circumferential end of the magnet tile.

9. The brushless synchronous motor of any preceding claim wherein each magnet tile of the plurality of magnet tiles produces a magnetization vector having a length that varies from a maximum length at a circumferential center of the magnet tile to a minimum length at each circumferential end of the magnet tile.

10. The brushless synchronous motor of any preceding claim wherein a ratio of a pole arc angle for each magnet tile of the plurality of magnet tiles to a pole pitch angle between circumferentially adjacent magnet tiles of the plurality of magnet tiles is between 0.8 and 0.9.

11. The brushless synchronous motor of any preceding claim wherein rotation of the rotor generates a back electromotive force constant (Ke) waveform that is sinusoidal in shape.

12. The brushless synchronous motor of any preceding claim wherein each magnet tile of the plurality of magnet tiles is configured in accordance with the formula $W_m = D_m \times \sin(\tau_a/2)$ in which $W_m$ is a maximum width of the magnet tile, $D_m$ is a diameter of the magnet tile and $\tau_a$ is a pole arc angle of the magnet tile.

13. The brushless synchronous motor of any preceding claim wherein each magnet tile of the plurality of magnet tiles is configured in accordance with the formula $t_{me} = [\tan((180°/P) + (180°/P) - (\tau_a/2)] * (t_s/2) - (t_s/2)$ where $t_{me}$ is a thickness of the magnet tile at a circumferential end of the magnet tile, P is the number of magnet tiles, $\tau_a$ is a pole arc angle of the magnet tile and $t_s$ is thickness of the shaft.

14. The brushless synchronous motor of any preceding claim wherein the stator defines exactly twelve radially inwardly extending teeth, the distributed winding layout defines exactly three motor phases and exactly four magnet tiles are supported on the rotor.

FIG. 1

FIG. 2

FIG. 3

FIG. 6

**FIG. 4**

**FIG. 5**

FIG. 7

FIG. 8

Europäisches
Patentamt

European
Patent Office

Office européen
des brevets

# EUROPEAN SEARCH REPORT

**Application Number**

EP 25 15 8284

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/201137 A1 (CRAPO ALAN D [US] ET AL) 30 October 2003 (2003-10-30) | 1-6,8-12 | INV. H02K1/278 |
| Y | * paragraphs [0030], [0037], [0040]; figures 2-4,7 * | 7,13,14 | H02K29/03 |
| A | WO 2016/174450 A1 (CORETEQ LTD [GB]) 3 November 2016 (2016-11-03) * claim 1; figure 14 * | 2,12 | |
| Y | US 5 886 440 A (HASEBE MASAHIRO [JP] ET AL) 23 March 1999 (1999-03-23) | 7,13 | |
| A | * figures 17-22 * | 12 | |
| Y | ARSONI BERNADUS BLASIO ET AL: "Effect of Step Skewing on the Cogging Torque of Permanent Magnet Synchronous Generator", 2022 11TH ELECTRICAL POWER, ELECTRONICS, COMMUNICATIONS, CONTROLS AND INFORMATICS SEMINAR (EECCIS), IEEE, 23 August 2022 (2022-08-23), pages 56-60, XP034202156, DOI: 10.1109/EECCIS54468.2022.9902932 [retrieved on 2022-10-05] * figures 3,8,9 * | 14 | |
| Y | FR 2 988 235 A1 (FAURECIA BLOC AVANT [FR]; PHENIX INTERNAT [FR]) 20 September 2013 (2013-09-20) | 7,13 | |
| A | * figures 2,3 * | 1-6, 8-12,14 | |
| X | CN 110 785 913 A (LEROY SOMER MOTEURS) 11 February 2020 (2020-02-11) * figure 1 * | 1 | |

**TECHNICAL FIELDS SEARCHED (IPC)**

H02K

The present search report has been drawn up for all claims

| Place of search | Date of completion of the search | Examiner |
|---|---|---|
| The Hague | 22 July 2025 | Kovacsovics, Martin |

EPO FORM 1503 03.82 (P04C01)

## ANNEX TO THE EUROPEAN SEARCH REPORT
## ON EUROPEAN PATENT APPLICATION NO.

EP 25 15 8284

This annex lists the patent family members relating to the patent documents cited in the above-mentioned European search report.
The members are as contained in the European Patent Office EDP file on
The European Patent Office is in no way liable for these particulars which are merely given for the purpose of information.

22-07-2025

| Patent document cited in search report | | | Publication date | Patent family member(s) | | Publication date |
|---|---|---|---|---|---|---|
| US 2003201137 | A1 | | 30-10-2003 | AU | 2002237967 A1 | 12-08-2002 |
| | | | | CN | 1489821 A | 14-04-2004 |
| | | | | EP | 1356574 A2 | 29-10-2003 |
| | | | | US | 2002101126 A1 | 01-08-2002 |
| | | | | US | 2003201137 A1 | 30-10-2003 |
| | | | | WO | 02060740 A2 | 08-08-2002 |
| WO 2016174450 | A1 | | 03-11-2016 | NONE | | |
| US 5886440 | A | | 23-03-1999 | JP | H0823664 A | 23-01-1996 |
| | | | | US | 5886440 A | 23-03-1999 |
| FR 2988235 | A1 | | 20-09-2013 | NONE | | |
| CN 110785913 | A | | 11-02-2020 | CN | 110785913 A | 11-02-2020 |
| | | | | EP | 3639349 A1 | 22-04-2020 |
| | | | | FR | 3067880 A1 | 21-12-2018 |
| | | | | US | 2020119604 A1 | 16-04-2020 |
| | | | | WO | 2018229065 A1 | 20-12-2018 |

EPO FORM P0459

For more details about this annex : see Official Journal of the European Patent Office, No. 12/82